Europäisches Patentamt

European Patent Office

Office européen des brevets

(19)

(11) **EP 0 782 244 B1**

(12) **FASCICULE DE BREVET EUROPEEN**

(45) Date de publication et mention
de la délivrance du brevet:
**20.03.2002 Bulletin 2002/12**

(51) Int Cl.⁷: **H02M 7/06**

(21) Numéro de dépôt: **96402902.9**

(22) Date de dépôt: **26.12.1996**

(54) **Diode rapide, capable de supporter une tension inverse et un courant direct élevés, obtenue par assemblage de diodes élémentaires**

Aus elementaren Dioden aufgebaute schnelle Diode mit höher Durchbruchspannung und höher direkter Stromzulässigkeit

Fast diode having high breakdown voltage and high direct current capability, obtained by assembling elementary diodes

(84) Etats contractants désignés:
**CH DE GB IT LI**

(30) Priorité: **27.12.1995 FR 9515545**

(43) Date de publication de la demande:
**02.07.1997 Bulletin 1997/27**

(73) Titulaires:
- **COMMISSARIAT A L'ENERGIE ATOMIQUE
  75015 Paris Cédex 15 (FR)**
- **COMPAGNIE GENERALE DES MATIERES
  NUCLEAIRES
  78140 Velizy Villacoublay (FR)**

(72) Inventeurs:
- **Chatroux, Daniel
  26200 Montelimar (FR)**
- **Kohn, Pierre-André
  57100 Thionville (FR)**

(74) Mandataire: **Signore, Robert et al
c/o BREVATOME
3, rue du Docteur Lanceraux
75008 Paris (FR)**

(56) Documents cités:
**DE-B- 1 095 384          US-A- 3 633 046**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une diode de puissance obtenue par assemblage de diodes élémentaires.

Elle s'applique notamment aux convertisseurs d'énergie utilisés dans des systèmes électroniques de puissance.

L'invention s'applique plus particulièrement aux alimentations électriques impulsionnelles de lasers du type à vapeur de cuivre.

## Etat de la technique antérieure

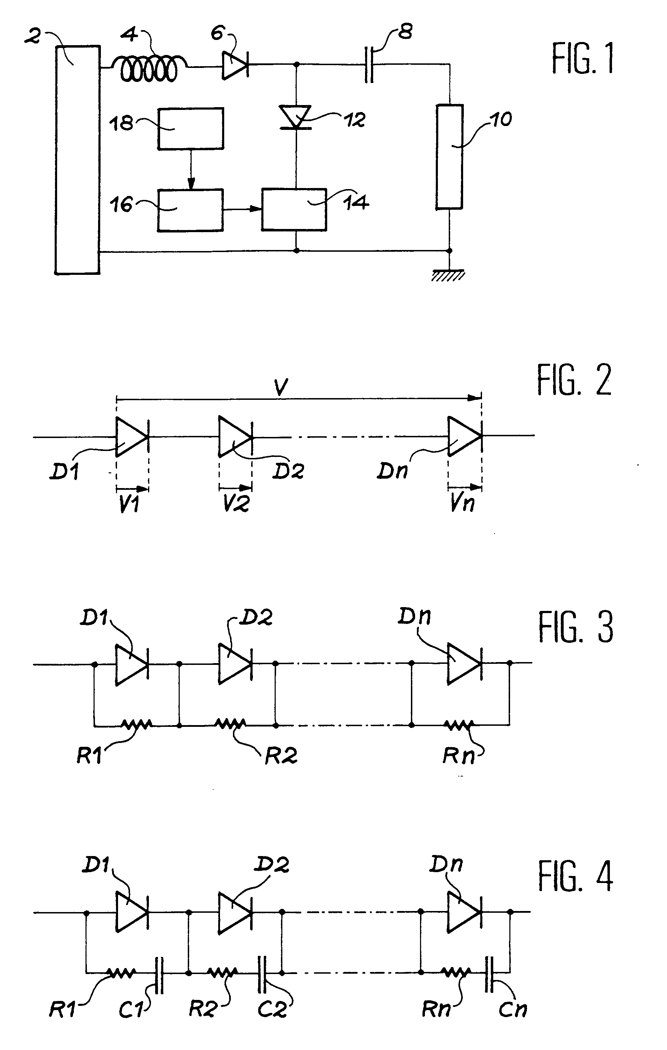

Un exemple d'une alimentation électrique impulsionnelle d'un laser à vapeur de cuivre est schématiquement représenté sur la figure 1.

Cette alimentation électrique impulsionnelle représentée sur la figure 1 comprend successivement une source de haute tension 2, une impédance 4, une diode 6 et un condensateur 8 qui est relié à une borne du tube, ou tête, d'un laser à vapeur de cuivre 10 comme on le voit sur la figure 1.

L'autre borne du tube du laser à vapeur de cuivre 10 est mise à la masse.

L'alimentation électrique impulsionnelle de la figure 1 comprend aussi une autre diode 12 dont la cathode est reliée à l'anode de la diode 6 et dont l'anode est reliée à une borne d'un commutateur électrique de puissance 14, l'autre borne de ce commutateur étant mise à la masse.

Ce commutateur 14 est commandé par des moyens appropriés 16 qui sont eux-mêmes commandés par une horloge 18.

L'alimentation électrique impulsionnelle de la figure 1 fonctionne suivant le principe de la charge d'un condensateur sous haute tension suivie de la décharge de ce condensateur sur la tête du laser à vapeur de cuivre.

Le condensateur 8 est chargé sous une tension égale au double de la haute tension continue fournie par la source 2 (qui vaut par exemple 15 kV).

Cette charge du condensateur 8 se fait à l'aide d'un circuit de charge de type résonnant, la diode 6 servant à éviter que le condensateur 8 ne se décharge.

Ce condensateur 8 est déchargé violemment sur la tête du laser à vapeur de cuivre 10 lors de la fermeture du commutateur 14.

Le laser se comporte comme une résistance en série avec une inductance (par exemple une résistance de 5 Ω en série avec une impédance de 500 nH).

Du fait du faible amortissement, une part importante de l'énergie vient recharger le condensateur de façon inverse (typiquement la moitié de l'énergie).

La diode 12 montée en série avec le commutateur 14 permet de bloquer le courant de sens négatif, de conserver l'énergie dans le condensateur 8 et donc de récupérer cette énergie.

Pour réaliser une alimentation électrique impulsionnelle du genre de celle de la figure 1, il est donc nécessaire de disposer de diodes rapides, capables de supporter une tension inverse importante (plusieurs dizaines de kV) et d'accepter un courant direct important (un courant moyen de 100 A à plusieurs centaines d'ampères et un courant-crête de 1000 A à plusieurs milliers d'ampères).

On connaît actuellement plusieurs façons d'obtenir une diode de puissance comme celle que constitue la diode 12 de la figure 1.

Une première façon consiste à utiliser une grosse diode de puissance du type "tube à gaz".

C'est la seule solution actuelle qui satisfasse aux trois conditions mentionnées plus haut pour la tension, le courant-crête et la rapidité.

Cependant, une telle solution est progressivement abandonnée du fait du coût élevé et de la fiabilité insuffisante de ce genre de diode.

Une deuxième façon consiste à mettre en série des diodes qui sont de petit "calibre" en ce qui concerne le courant, c'est-à-dire capables de supporter un courant direct inférieur à 30 A et un courant-crête de l'ordre de 100 A mais qui sont "non spécifiées en avalanche", c'est-à-dire dont la capacité de supporter un régime d'avalanche n'est pas garantie.

Ceci est illustré schématiquement par la figure 2 où l'on voit des diodes D1, D2 ..., Dn montées en série et respectivement soumises à des tensions V1, V2, ..., Vn tandis que l'ensemble de ces n diodes est soumis à une tension V.

Un tel montage pose un problème de déséquilibre statique.

En effet, compte tenu des dispersions qui existent entre les caractéristiques inverses pour un même type de diode, chacune des diodes D1 à Dn sera parcourue par un même courant inverse $i_r$ mais sera soumise à une tension différente de V/n.

Certaines diodes pourront ainsi avoir entre leurs bornes une différence de potentiel destructrice supérieure à $V_{rrm}$, $V_{rrm}$ étant la tension inverse maximale supportée par une diode.

Pour résoudre ce problème, on ajoute à l'ensemble des diodes de la figure 2 un réseau de résistances électriques d'équilibrage R1, R2, ..., Rn, ces résistances étant respectivement montées en parallèle avec les diodes D1, D2, ..., Dn comme on le voit sur la figure 3, afin d'assurer l'égalité des tensions aux bornes de ces diodes.

Le montage schématiquement illustré par la figure 3 pose cependant un problème de déséquilibre dynamique.

En effet, lors de l'ouverture du commutateur comprenant un tel ensemble de diodes, chaque diode est parcourue par un courant inverse pendant un bref instant (phénomène de recouvrement).

Il en résulte une surtension due à l'inductance parasite de cette diode.

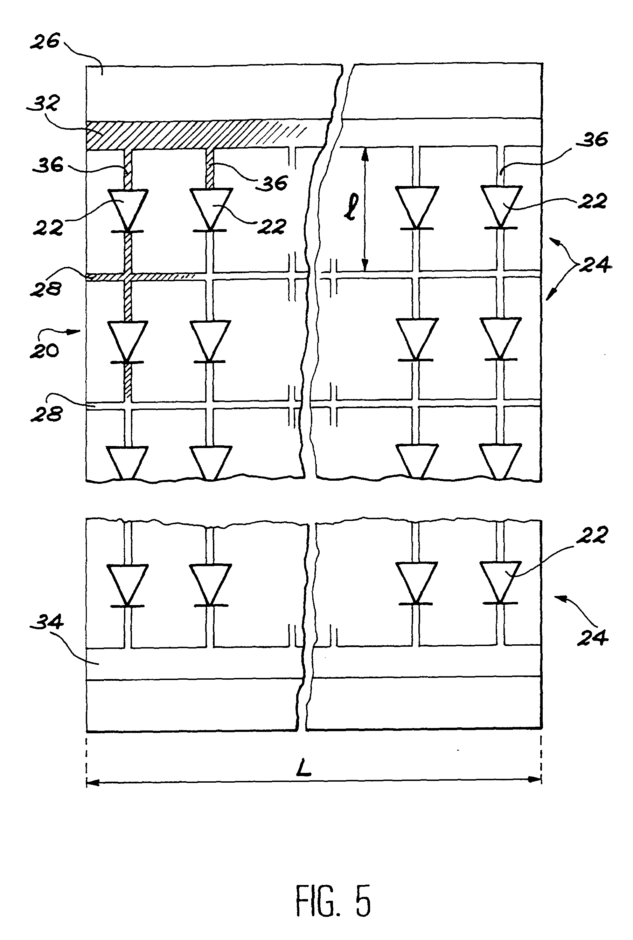

Pour résoudre ce problème et se prémunir de ce genre de surtension qui est une source de déséquilibre, on place un montage de type "RC" aux bornes de chacune des diodes de la figure 3 comme l'illustre schématiquement la figure 4.

Comme on le voit sur cette figure 4, on ajoute au montage de la figure 3 des condensateurs C1, C2, ..., Cn qui sont respectivement associés aux résistances R1, R2, ..., Rn.

Chaque condensateur Ci est monté en série avec la résistance Ri correspondante, l'ensemble Ri, Ci étant monté en parallèle avec la diode associée Di (avec $1 \leq i \leq n$).

On aboutit alors à un montage beaucoup plus complexe que les précédents.

Une troisième façon d'obtenir une diode de puissance consiste à monter en série des diodes sans réseau d'équilibrage.

Chaque diode doit alors pouvoir laisser passer le courant lorsque sa tension maximale est atteinte et doit donc être capable de supporter un régime d'avalanche, c'est-à-dire être capable de laisser passer un courant inverse comme une diode Zener.

Le régime d'avalanche dans les diodes donne lieu à une dissipation d'énergie répartie sur tout le support sur lequel se trouve l'ensemble des diodes.

Cette dissipation d'énergie n'est pas destructrice car elle n'est pas localisée en un seul point.

Cette troisième façon de faire, qui utilise des diodes "spécifiées en avalanche", est limitée à des diodes de faible calibre en courant ou à des diodes dont le temps de recouvrement inverse ("reverse recovery time") $t_{rr}$ est élevé, supérieur à 100 ns.

Ainsi, dans les convertisseurs d'énergie de forte puissance, il convient d'associer aux commutateurs commandés des diodes haute tension très performantes, ayant les qualités suivantes :

- capacité de supporter une tension inverse importante (plusieurs dizaines de kV),
- capacité de supporter un courant direct important (courant moyen de 100 A à plusieurs centaines d'ampères pour un courant-crête de 1000 A à plusieurs milliers d'ampères),
- grande rapidité ($t_{rr} <$ 50 ns), et
- faible chute de tension directe.

Or, il n'existe à l'heure actuelle aucune solution satisfaisante permettant d'obtenir une diode de puissance: capable de supporter une tension inverse importante et un courant direct important tout en étant très rapides.

## Exposé de l'invention

La présente invention a pour objet une diode de puissance présentant simultanément les qualités ci-dessus sans avoir les inconvénients mentionnés plus haut à propos des diodes de puissance de type "tube à gaz".

DE-A-1095384 décrit un montage en série et en parallèle de diodes à semiconducteurs.

De façon précise, la présente invention a pour objet une diode de puissance, caractérisée en ce qu'elle comprend au moins une matrice de diodes élémentaires, chacune de ces diodes élémentaires ayant un temps de recouvrement inverse inférieur à 50 ns et étant capable de supporter un régime d'avalanche, cette matrice comprenant une pluralité d'étages montés en série, chaque étage comprenant une pluralité desdites diodes élémentaires montées en parallèle.

La tension inverse maximale supportée par chaque diode élémentaire est par exemple au moins égale à 200 V.

Le courant direct moyen supporté par chaque diode élémentaire est par exemple de l'ordre de 8 A.

De préférence, les diodes élémentaires de la matrice sont reliées les unes aux autres par de larges pistes électriquement conductrices de largeur au moins égale à 4 mm, de manière à permettre le passage d'un courant important sans échauffement excessif et à diminuer l'importance des connexions entre ces diodes élémentaires.

De préférence également, les portions de piste respectivement associées aux diodes élémentaires ont toutes la même longueur.

De préférence également, les diodes élémentaires sont montées sur un support électriquement isolant, les pistes conductrices sont formées sur ce support et, pour chaque étage, la piste reliant les anodes des diodes élémentaires de cet étage et la piste reliant les cathodes des diodes élémentaires de cet étage s'étendent d'un côté à l'autre du support.

On permet ainsi une répartition homogène du courant entre les différentes rangées parallèles de la matrice et l'on diminue l'impédance des connexions entre les diodes.

On obtient encore une diode de puissance conforme à l'invention en montant en série une pluralité d'exemplaires de ladite matrice de diodes élémentaires.

## Brève description des dessins

La présente invention sera mieux comprise à la lecture de la description d'exemples de réalisation donnée ci-après, à titre purement indicatif et nullement limitatif, en faisant référence aux dessins annexés sur lesquels :

- la figure 1, déjà décrite, illustre schématiquement un exemple connu d'alimentation électrique impulsionnelle d'un laser à vapeur de cuivre,
- la figure 2, déjà décrite, illustre schématiquement un montage connu de diodes en série, destiné à former une diode de puissance,
- la figure 3, déjà décrite, montre schématiquement un autre montage connu de telles diodes en série,

- la figure 4, déjà décrite, montre schématiquement un autre montage perfectionné connu de telles diodes en série,

- la figure 5 est une vue schématique d'un mode de réalisation particulier de la diode de puissance objet de l'invention,

- la figure 6 illustre schématiquement la répartition homogène de l'impédance de câblage de la diode de puissance de la figure 5,

- la figure 7 illustre schématiquement un autre mode de réalisation particulier dans lequel des diodes de puissance du genre de celui de la figure 5 sont montées en série, et

- la figure 8 est une vue schématique d'une alimentation électrique impulsionnelle avec doublage de tension et compression magnétique, alimentation à laquelle s'applique tout particulièrement la présente invention.

**Exposé détaillé de modes de réalisation particuliers**

La diode de puissance conforme à l'invention, qui est schématiquement représentée sur la figure 1, comprend une matrice 20 de diodes élémentaires 22, lesquelles supportent un régime d'avalanche et sont très rapides.

Le temps de recouvrement inverse $t_{rr}$ de ces diodes élémentaires est inférieur à 50 ns.

La matrice 20 comprend une pluralité d'étages 24 montés en série, comme on le voit sur la figure 5.

Chaque étage 24 comprend une pluralité desdites diodes élémentaires 22 qui sont montées en parallèle comme on le voit aussi sur cette figure 5.

A titre purement indicatif et nullement limitatif, les diodes élémentaires 22 sont des diodes de puissance commercialisées par la société Motorola sous la référence MUR 820 ou MUR 840 ou MUR 860 ou encore des diodes commercialisées par la société Thomson sous la référence BYW 29-200.

Les caractéristiques de ces diodes sont indiquées sur le tableau I qui figure à la fin de la présente description.

Dans ce tableau, les paramètres $V_{rrm}$, $I_m$ et $t_{rr}$ représentent respectivement la tension inverse maximale supportée par les diodes élémentaires, le courant direct moyen supporté par ces diodes élémentaires et le temps de recouvrement inverse de celles-ci.

Ces diodes commercialement disponibles présentent l'avantage de bien supporter le régime d'avalanche et d'être rapides.

De plus, elles ne présentent, à l'état passant, qu'une chute de tension de 0,85 V.

Dans la matrice 20, les diodes sont associées en série/parallèle sans réseau d'équilibrage statique ou dynamique.

Ceci est possible puisque les diodes choisies supportent bien le régime d'avalanche.

La matrice 20 est formée sur un support électriquement isolant 26.

Il s'agit d'un circuit imprimé sur lequel les diodes élémentaires sont donc implantées.

Comme on le voit sur la figure 5, des pistes électriquement conductrices 28, parallèles les unes aux autres, sont formées sur le circuit imprimé 26 et permettent le montage en parallèle des diodes élémentaires dans chaque étage 24.

Plus précisément, on voit que, dans chaque étage, les anodes des diodes sont reliées les unes aux autres par une telle piste et les cathodes de ces diodes sont également reliées les unes aux autres par une telle piste.

On notera qu'une autre piste conductrice 32, qui est parallèle aux pistes 28 et formée à une extrémité de la matrice pour relier toutes les anodes des diodes du premier étage de la matrice entre elles, a une largeur supérieure à celle des pistes 28.

Cette piste 32 constitue la connexion d'anode de la diode de puissance de la figure 5.

De même, une autre piste conductrice 34, qui est parallèle aux pistes 28 et formée à l'autre extrémité de la matrice pour relier toutes les cathodes des diodes du dernier étage de la matrice entre elles, a une largeur supérieure à celle des pistes 28 (qui sont comprises entre ces pistes 32 et 34).

Cette piste 34 constitue la connexion de cathode de la diode de puissance de la figure 5.

On voit également sur la figure 5 d'autres pistes électriquement conductrices 36 qui sont formées sur le circuit imprimé 26 et qui sont perpendiculaires aux pistes 28, 32 et 34.

Ces pistes 36 permettent à chaque diode élémentaire 22 d'être reliée aux pistes parallèles précédentes qui lui sont associées.

Ces pistes 36 correspondent respectivement aux colonnes de la matrice 20 tandis que les pistes 28, 32 et 34 correspondent respectivement aux lignes de la matrice 20.

On précise que la largeur des pistes 28, 32, 34 et 36 est au moins égale à 4 mm.

Ceci permet le passage d'un courant électrique important dans les diodes élémentaires 22, sans échauffement excessif de celles-ci, et conduit également à de faibles inductances parasites au niveau des connexions entre diodes pour permettre l'établissement rapide du courant électrique dans la matrice.

Les portions de pistes 36 respectivement associées aux diodes élémentaires 22 ont la même longueur 1.

Les diodes élémentaires ont donc des inductances de câblage identiques.

On réalise ainsi l'équilibrage des courants électriques des diodes de la matrice 20.

On voit sur la figure 5 que toutes les pistes 28, 32 et 34 s'étendent d'un côté à l'autre du circuit imprimé 26.

Dans l'exemple représenté, ce circuit imprimé est de forme rectangulaire et ces pistes s'étendent suivant toute la largeur L de ce circuit imprimé 26.

Ceci permet d'obtenir une répartition homogène du courant électrique entre les différentes diodes montées en parallèle dans chaque étage.

Le montage en série des étages 24 les uns avec les autres diminue les risques d'amorçage entre étage à la surface du circuit imprimé 26 et améliore le synchronisme d'apparition des courants entre les différentes branches parallèles de la matrice.

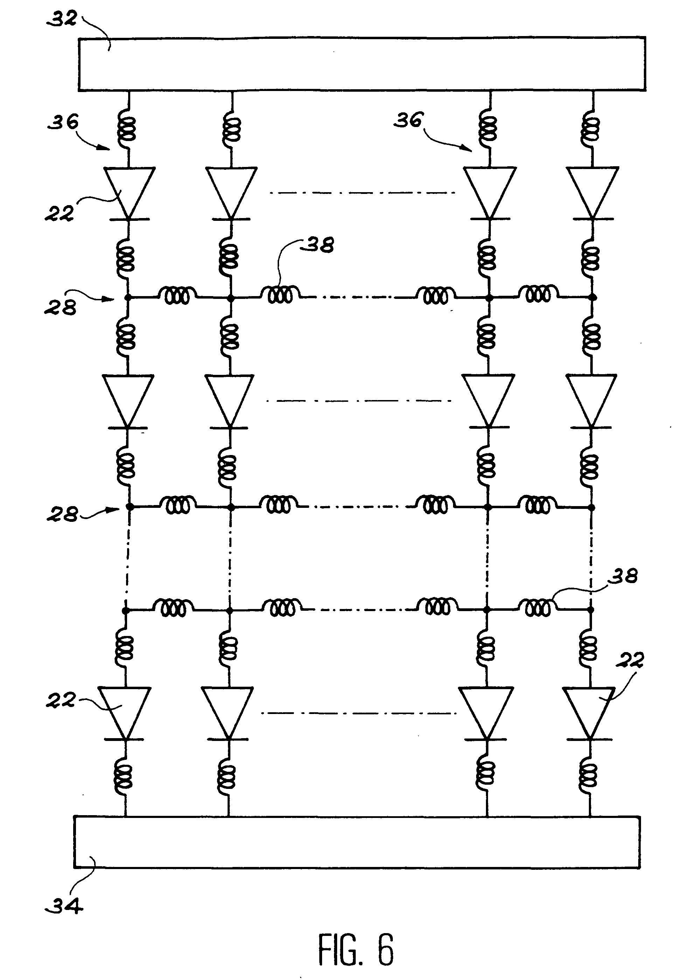

On améliore ainsi, en effet, la répartition de l'inductance de câblage comme le montre la figure 6 qui est un schéma électrique correspondant à la matrice de la figure 5.

Les différentes inductances de câblage de cette matrice ont la référence 38 sur cette figure 6.

Dans la matrice 20 de ;la figure 5, un espace suffisant est laissé entre les diodes élémentaires 22. Cet espace est au moins éqal à 5 mm.

Ceci permet de résoudre les problèmes de tenue en tension et d'échauffement en permettant en outre le passage facile d'un éventuel fluide de refroidissement (par exemple l'air ou l'huile) entre les diodes de la matrice 20.

L'utilisation de radiateurs de refroidissement n'est alors pas nécessaire.

On a par exemple réalisé une matrice de diodes de type MUR 840 à 15 lignes (et donc 15 étages) et 10 colonnes.

Une telle matrice constitue une diode haute tension rapide dont les caractéristiques sont les suivantes :

$$V_{rrm} = 6 \text{ kV}$$

$$I_m = 80 \text{ A}$$

$$t_{rr} = 35 \text{ ns}$$

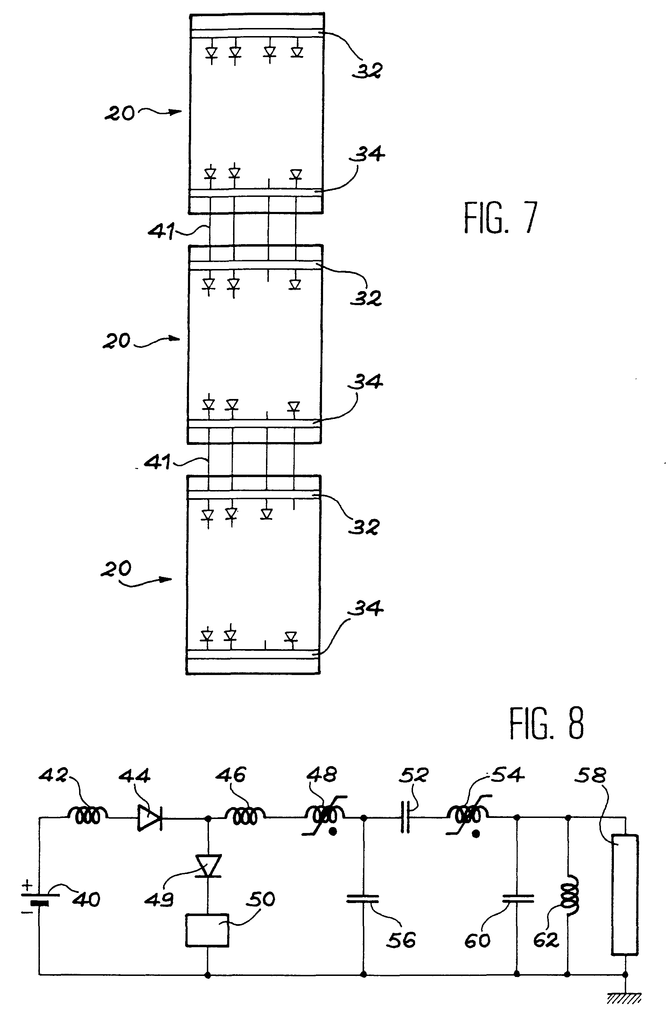

La figure 7 illustre schématiquement une autre diode de puissance conforme à l'invention.

Dans le cas de la figure 7, cette diode de puissance est constituée par la mise en série, au moyen de conducteurs électriques 41, d'une pluralité de matrices 20 du genre de celles de la figure 5 (trois matrices dans l'exemple représenté).

On peut par exemple connecter plusieurs matrices de diodes de type MUR 840 dont les caractéristiques ont été données ci-dessus afin de réaliser, par exemple, une diode de puissance 30 kV/80 A moyen/ 1000 A crête.

On a utilisé une telle diode de puissance en série avec un interrupteur de puissance 25 kV/1000 A crête réalisé à partir de transistors MOS.

La figure 8 est une vue schématique d'une alimentation électrique impulsionnelle avec doublage de tension et compression magnétique.

Une diode de puissance conforme à l'invention est plus particulièrement intéressante dans une telle alimentation pour avoir un bon fonctionnement aux alimentations pour une tension d'entrée variant de 0 V à la tension nominale de fonctionnement de cette alimentation.

Cette alimentation électrique impulsionnelle schématiquement représentée sur la figure 8 comprend, de façon classique, une source de haute tension continue 40 dont la borne positive + est reliée à un circuit de charge résonnant comprenant une inductance de charge 42 et une diode 44.

La diode 44 est suivie par une inductance d'inversion 46 qui est connectée à une borne d'une inductance de blocage 48.

L'alimentation impulsionnelle de la figure 8 comprend aussi une diode de puissance 49 dont l'anode est reliée à la liaison entre la cathode de la diode 44 et l'inductance 46.

Un interrupteur 50 est connecté entre la cathode de la diode 49 et le pôle négatif - de la source 40.

Un premier condensateur 52 est connecté à l'autre borne de l'inductance de blocage 48 et ce condensateur 52 est connecté à une borne d'une inductance saturable 54.

Un autre condensateur 56 est monté entre cette autre borne de l'inductance de blocage 48 et la borne négative de la source 40.

La charge 58 que l'on veut alimenter, par exemple un laser à vapeur de cuivre, est montée entre la borne négative de la source 40 et l'autre borne de l'inductance saturable 54.

Un autre condensateur 60 et une autre inductance 62 sont montés en parallèle entre les bornes de la charge 58.

La diode de puissance 49 est une diode conforme à la présente invention.

On applique à l'entrée de l'alimentation une haute tension continue E grâce à la source 40.

L'interrupteur 50 étant ouvert, on charge ainsi en parallèle les condensateurs 52 et 56 sous une tension 2 E du fait de circuit de charge résonnant constitué par l'inductance 42 et la diode 44.

Ensuite, on ferme rapidement l'interrupteur 50.

Une oscillation de tension apparaît dans la boucle formée par les composants 50, 49, 46, 48 et 56 et la tension aux bornes du condensateur 56 s'inverse.

Une tension 4 E est alors appliquée entre les bornes de l'inductance saturable 54 qui est conçue pour ne se saturer qu'à partir de ce moment.

L'énergie est alors transférée au condensateur 60 et la tension est appliquée sur la tête du laser à vapeur de cuivre 58.

La diode de puissance 49 permet donc d'inverser la tension entre les bornes du condensateur 56 et d'attendre la saturation de l'inductance saturable 54.

L'alimentation électrique impulsionnelle de la figure 8 est particulièrement adaptée à l'alimentation impulsionnelle d'un laser à vapeur de cuivre, d'un laser à CuBr ou d'un laser à CuHBr.

Tableau I

|  | $V_{rrm}$ | $I_m$ | $t_{rr}$ |
|---|---|---|---|
| MUR 820 | 200 V | 8 A | 35 ns |
| BYW 29-200 | 200 V | 8 A | 35 ns |
| MUR 840 | 400 V | 8 A | 35 ns |
| MUR 860 | 600 V | 8 A | 50 ns |

**Revendications**

1. Diode de puissance, **caractérisée en ce qu'**elle comprend au moins une matrice (20) de diodes élémentaires (22), chacune de ces diodes élémentaires ayant un temps de recouvrement inverse inférieur à 50 ns et étant capable de supporter un régime d'avalanche, cette matrice comprenant une pluralité d'étages (24) montés en série, chaque étage comprenant une pluralité desdites diodes élémentaires montées en parallèle, les diodes de cette matrice n'étant associées avec aucun réseau d'équilibrage statique ou dynamique.

2. Diode de puissance selon la revendication 1, **caractérisé en ce que** la tension inverse maximale supportée par chaque diode élémentaire (22) est au moins égale à 200 V.

3. Diode de puissance selon l'une quelconque des revendications 1 et 2, **caractérisée en ce que** le courant direct moyen supporté par chaque diode élémentaire (22) est de l'ordre de 8 A.

4. Diode de puissance selon l'une quelconque des revendications 1 à 3, **caractérisée en ce que** les diodes élémentaires de la matrice (20) sont reliées les unes aux autres par des pistes électriquement conductrices (28, 32, 34, 36) dont la largeur est au moins égale à 4 mm.

5. Diode de puissance selon l'une quelconque des revendications 1 à 4, **caractérisée en ce que** les diodes élémentaires de la matrice (20) sont reliées les unes aux autres par des pistes électriquement conductrices et **en ce que** les portions de piste respectivement associées aux diodes élémentaires ont toutes la même longueur.

6. Diode de puissance selon l'une quelconque des revendications 1 à 5, **caractérisée en ce qu'**elle comprend en outre un support électriquement isolant (26), sur lequel se trouve la matrice (20) de diodes élémentaires, **en ce que** les diodes élémentaires de la matrice sont reliées les unes aux autres par des pistes électriquement conductrices formées sur ce support et **en ce que**, pour chaque étage (24), la piste reliant les anodes des diodes élémentaires de cet étage et la piste reliant les cathodes des diodes élémentaires de cet étage s'étendent d'un côté à l'autre du support.

7. Diode de puissance selon l'une quelconque des revendications 1 à 6, **caractérisée en ce que** les diodes élémentaires (22) sont distantes les unes des autres d'au moins 5 mm.

8. Diode de puissance selon l'une quelconque des revendications 1 à 7, **caractérisée en ce qu'**elle comprend une pluralité d'exemplaires de ladite matrice (20) qui sont montés en série.

**Patentansprüche**

1. Leistungsdiode, **dadurch gekennzeichnet, dass** sie wenigstens eine Matrix (20) aus Elementardioden (22) umfasst, wobei jede dieser Elementardioden eine Sperrverzögerungszeit unter 50 ns hat und fähig ist, einen Lawinenbetrieb auszuhalten, und diese Matrix eine Vielzahl von in Serie geschalteter Stufen (24) umfasst und jede Stufe dabei eine Vielzahl der genannten, parallelgeschalteten Elementardioden umfasst, wobei die Dioden dieser Matrix mit keinem statischen oder dynamischen Ab- bzw. Ausgleichgitter verbunden sind.

2. Leistungsdiode nach Anspruch 1, **dadurch gekennzeichnet, dass** die von jeder Elementardiode (22) ausgehaltene maximale Sperrspannung wenigstens gleich 200 V ist.

3. Leistungsdiode nach einem der Ansprüche 1 und 2, **dadurch gekennzeichnet, dass** der von jeder Elementardiode (22) ausgehaltene Richtstrom in der Größenordnung von 8 A ist.

4. Leistungsdiode nach einem der Ansprüche 1 bis 3, **dadurch gekennzeichnet, dass** die Elementardioden der Matrix (20) miteinander durch elektrische Leiterbahnen (28, 32, 34, 36) verbunden sind, deren Breite wenigstens 4 mm beträgt.

5. Leistungsdiode nach einem der Ansprüche 1 bis 4, **dadurch gekennzeichnet, dass** die Elementardioden der Matrix (20) durch Leiterbahnen miteinander verbunden sind und dass die jeweils den Elementardioden zugeordneten Leiterbahnenteilstücke alle dieselbe Länge haben.

**6.** Leistungsdiode nach einem der Ansprüche 1 bis 5, **dadurch gekennzeichnet, dass** sie außerdem einen elektrisch isolierenden Träger (26) umfasst, auf dem sich die Elementardioden-Matrix (20) befindet, dass die Elementardioden der Matrix durch elektrische Leiterbahnen miteinander verbunden sind, die auf diesem Träger ausgebildet sind, und dass sich bei jeder Stufe (24) die die Anoden der Elementardioden dieser Stufe verbindende Leiterbahn und die die Katoden der Elementardioden dieser Stufe verbindende Leiterbahn von einer Seite des Trägers zur anderen erstrecken.

**7.** Leistungsdiode nach einem der Ansprüche 1 bis 6, **dadurch gekennzeichnet, dass** die Elementardioden (22) um wenigstens 5 mm voneinander beabstandet sind.

**8.** Leistungsdiode nach einem der Ansprüche 1 bis 7, **dadurch gekennzeichnet, dass** sie eine Vielzahl von Exemplaren der genannten Matrix (20) umfasst, die in Serie geschaltet sind.

**Claims**

**1.** Power diode, **characterized in that** it comprises at least one matrix (20) of individual diodes (22), each of these individual diodes having a reverse recovery time of less than 50 ns and being capable of withstanding an avalanche regime, this matrix comprising a number of stages (24) mounted in series, each stage comprising a number of the said individual diodes mounted in parallel, the diodes of this matrix not being combined with any static or dynamic balancing network.

**2.** Power diode according to Claim 1, **characterized in that** the maximum reverse voltage withstood by each individual diode (22) is at least equal to 200 V.

**3.** Power diode according to either of Claims 1 and 2, **characterized in that** the average direct current withstood by each individual diode (22) is of the order of 8 A.

**4.** Power diode according to any one of Claims 1 to 3, **characterized in that** the individual diodes of the matrix (20) are linked to one another by electrically conducting tracks (28, 32, 34, 36) the width of which is at least equal to 4 mm.

**5.** Power diode according to any one of Claims 1 to 4, **characterized in that** the individual diodes of the matrix (20) are linked to one another by electrically conducting tracks and **in that** the track portions respectively associated with the individual diodes all have the same length.

**6.** Power diode according to any one of Claims 1 to 5, **characterized in that** it further comprises an electrically insulating support (26), on which is located the matrix (20) of individual diodes, **in that** the individual diodes of the matrix are linked to one another by electrically conducting tracks formed on this support and **in that**, for each stage (24), the track linking the anodes of the individual diodes of this stage and the track linking the cathodes of the individual diodes of this stage extend from one side of the support to the other.

**7.** Power diode according to any one of Claims 1 to 6, **characterized in that** the individual diodes (22) are at least 5 mm distant from one another.

**8.** Power diode according to any one of Claims 1 to 7, **characterized in that** it comprises a number of copies of the said matrix (20) which are mounted in series.

FIG. 1

FIG. 2

FIG. 3

FIG. 4

8

FIG. 5

FIG. 6

FIG. 7

FIG. 8